# EUROPEAN PATENT SPECIFICATION

(11) **EP 0 351 466 B1**
(45) Date of publication and mention of the grant of the patent: **22.09.1993**
(21) Application number: 88306721.7
(22) Date of filing: 21.07.1988
(51) Int. Cl.: F16L 37/08

(54) **Improvements in or relating to tube couplings**
Rohrkupplung
Raccord de tuyaux

(43) Date of publication of application: 24.01.1990
(73) Proprietor: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(56) References cited:
- EP-A- 0 182 561
- FR-A- 1 290 295
- FR-A- 2 398 251
- FR-A- 2 532 397
- GB-A- 1 520 742
- US-A- 3 768 476

## Description

This invention relates to tube couplings of the kind comprising a coupling body having a throughway open at least one end to receive a tube and a locking device disclosed in the throughway to lock the tube automatically in the coupling body on entry of the tube into the body. One such coupling is described in my U.K. Patent Specification No. 1520742 in which a tube is locked in the throughway in the coupling body by means of a collet having a plurality of resilient arms extending into the throughway from said open end of the throughway and co-operating with the tapered cam surface formed in the throughway which reduces towards the open end of the throughway to compress the collet arms inwardly against the tube and thereby lock the tube in the throughway. Other forms of gripping devices such a grab rings, spring washers and the like are equally applicable.

A separate resilient seal is supported in the coupling body to seal with the outer surface of the tube locked in the body by the collet.

FR-A-2398251 shows a further arrangement for securing a tube in an open end of a throughway extending into a body member. The arrangement comprises inner and outer sleeve components through which the tube to be coupled to the body extends. The inner sleeve has a clearance from the tube and has an integral sealing element which engages the outer periphery of the tube. The inner sleeve also has an encircling groove in which an O-ring is mounted which engages the inner surface of the outer sleeve. The outer sleeve is mounted in the throughway and has one end inturned to engage in a groove in the inner sleeve and the other end inturned to engage and grip the tube. There are therefore three parallel potential leak paths from the end of the tube two of which have single seals and the third of which between the outer sleeve and coupling body is not sealed at all.

The object of the present invention is to provide an improved sealing arrangement for a tube secured in an open end of a throughway in a coupling body.

This invention provides a tube coupling comprising a body having a throughway with at least one open end to receive a tube to be connected therein, the throughway having an annular shoulder encircling the throughway at a location spaced from said open end and facing towards the open end to form an end stop for a tube to be inserted in the throughway, the throughway having an enlarged portion adjacent to the open end of the throughway, a device in the enlarged portion of the throughway to receive and grip a tube located in the throughway and sealing means consisting of two annular seals encircling the tube to prevent loss of fluid from the open end of the throughway; wherein the sealing means comprise an annular seal formed integrally with the body around the throughway adjacent to the annular shoulder to engage and seal with the outer surface of the tube located in the throughway and further an annular sealing ring located in the enlarged portion of the throughway between the tube gripping device and said integral annular seal to engage and seal with the outer surface of the tube.

Thus the present invention provides a dual sealing arrangement in a single potential leak path from the tube in the coupling body to provide a seal of greater certainty.

In accordance with a further feature of the invention a sleeve may be provided to engage in the part of the tube extending into the throughway to support the tube from within against the encircling annular seal.

More specifically the sleeve may be formed integrally with the coupling body and may extend from the annular shoulder therein towards the open end of the throughway to engage in a tube inserted into the throughway.

In any of the above arrangements the coupling device may comprise a collet having a multiplicity of resilient fingers projecting into said throughway and the throughway may have a tapered cam surface diminishing towards the open end of the throughway with which the fingers of the collet are engageable to press the fingers against the outer surface of the tube and thereby lock the tube in the throughway.

Also, the coupling body may have a plurality of open ends each having coupling devices and annular seals to receive and hold the tubes in sealing engagement therein.

The following is a description of some specific embodiments of the invention, reference being made to accompany drawings in which:
Figure 1 is sectional view through a straight double ended tube coupling according to the invention;
Figure 1a is an enlarged scrap view of part of the coupling body indicated by the arrow on Figure 1;
Figure 2 is a similar view to Figure 1 of an elbow form coupling embodying the invention;
Figure 3 is a similar view to Figures 1 and 2 of a T-form coupling embodying the invention; and
Figure 4 is a similar view to Figure 1 showing a modified form of coupling embodying the invention.

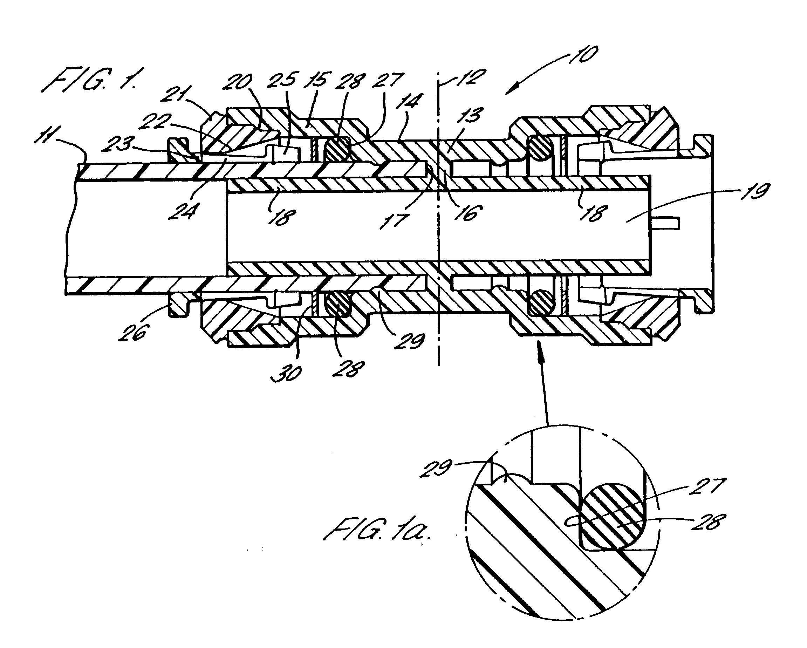

Referring firstly to Figures 1 and 1a of the accompanying drawings, there is shown a "straight" form double ended tube coupling indicated generally at 10 intended to receive a pair of tubes 11 (only one of which is illustrated) in opposite ends thereof. The tube coupling is symmetrical about the vertically extending chain line 12 and, for the purposes of the present described, the coupling to one side of the line 12 will be described, it being understood that the coupling to the other side of the line is identical.

The coupling comprises a coupling body 13 of generally cylindrical form having a central portion 14 and a enlarged diameter end portion 15. Midway along the central portion 14 there is annular shoulder 16 formed integrally with and encircling the inner periphery of the central portion the side wall 17 of which provide end stops for limiting the insertion of the tubes 11 into the coupling body from either end thereof. An inner rigid sleeve 18 formed integrally with the shoulder 16 extends concentrically along the coupling body to either side of the shoulder towards the open ends of the coupling body to engage in and support the tubes 11 to be received in the coupling body. The sleeve 18 forms a throughway 19 extending through the coupling body.

The open end of each portion 15 of the coupling body is formed with a stepped counter bore 20 in which an annular insert 21 is secured. In the case where the coupling body and insert are formed from thermoplastic materials, the insert is secured in the open end of the coupling body by ultrasonic welding to form an integral structure. The insert is formed with a tapered cam surface 22 reducing in diameter in a direction extending out of the body. A collet 23 extends into the throughway and is formed with the plurality of resilient fingers 24 which terminate in heads 25 engagable with the cam surface 22 and outer surface of the tube 11. The resilient fingers of the collet are formed to grip tube 11 automatically on insertion of the tube into the throughway and, if the tube is them moved in a direction to withdraw the tube, the fingers engage the cam surface 22 and are compressed thereby against the tube 11 to grip and lock the tube in the coupling body. As can be seen in the drawing, the tube 11 is supported from within by the inner sleeve 18 in the region where the heads 25 of the resilient fingers engage the tube. Thus an effective gripping action is provided by the resilient fingers on the tube even in the case of a relatively soft walled tube. The collet 23 on the outer side of the insert 21 is formed with an out turned head or flange 26 to facilitate release of the tube clamping action of the collet by pressing the collet into the throughway as the tube 11 is extracted from the throughway.

As indicated earlier, the coupling body 13 is enlarged in diameter both internally and externally between the central portion 14 and the end portion 15 this resulting in an internal step 27 in a coupling body facing towards the open end of the throughway. An O-ring seal 28 is lodged in the enlarged end portion of th coupling body against the shoulder 27 to seal with the wall of the coupling body and the tube 11. A washer 30 is disposed between the seal 28 and end of the collet to prevent the seal being forced under pressure between the fingers of the collet.

The relative external diameter of the sleeve 18 and internal diameter of the central portion 14 of the coupling body are such as to provide an annular recess of comparable cross-section to the tube 11 so that the tube is a close fit between the central portion 14 and sleeve 18 as can be seen in the drawing. The central portion 14 of the coupling body has an integral annular part circular cross-section seal 29 formed therein spaced between the shoulder 17 and the step 27 to form a primary seal with the tube 11. The tube 11 is supported on the seal 18 where it engages the seal 29 so that even in the case of a tube formed from a relatively soft material, an effective seal is provided between the tube and central portion 14 of the coupling body. The O-ring seal 28 therefore provides a secondary seal between the coupling body and tube. The primary and secondary seals are shown in greater detail in the enlarged scrap view of Figure 1a.

The coupling body described above is essentially intended for use with relatively soft wall tubing such as plastic tubing and primary seal formed integrally in the coupling body provides an interference fit and therefore an effective seal with the tube with the support of the insert sleeve 18. The coupling is also suitable for use with metalic tubing, i.e. relatively rigid tubing, although the insert sleeve or tube support is not required in this case and the seal is dimensioned to provide a interference fit with the outside tube diameter.

The arrangement is suitable for all forms of automatically gripping push-end couplings including collet constructions described and illustrated above and also grap ring or other friction grip arrangement. A secondary seal may be provided on either side of the integral seal and may be a simple elastomeric seal or an O-ring type seal as described above.

The provision of the integral seal acts as a back-up seal where an elastomeric or O-ring seal is provided and is particularly benefical in cases of extreme environmental conditions, such a temperature, pressure etc. in which breakdown of a elastomeric seal may take place. Such arrangements are particularly valuable in cases where the fittings are being used in supply lines for petrol or other inflamable fluids.

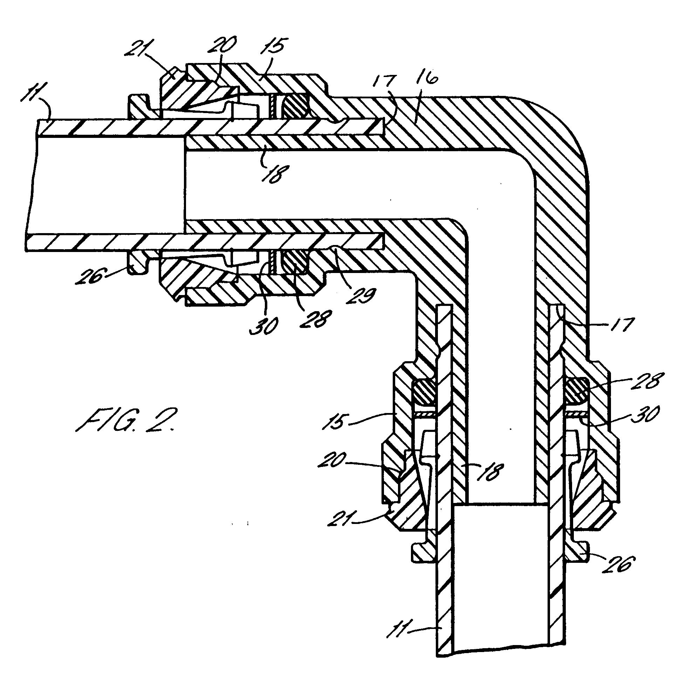

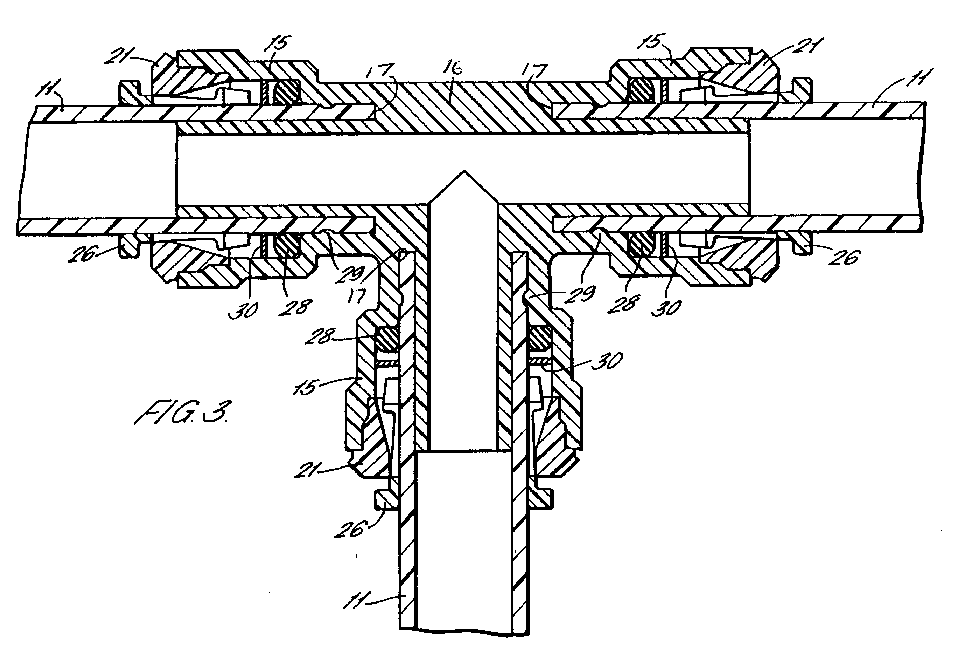

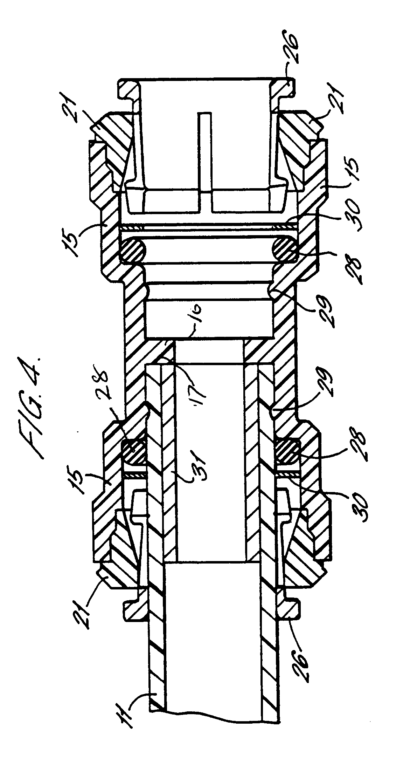

The arrangement of Figure 1 shows a straight double ended coupling body. Figure 2 shows a double ended elbow formed coupling which is of otherwise similar construction except that the annular shoulder 13 from which the integral sleeves 18 extend extends around the apex of the corner of the elbow. Figure 3 is a further variant in the form of a T-shaped coupling. Finally Figure 4 shows a modification of the arrangement shown in Figure 1 in which the insert sleeve 18 is not formed integral with the coupling body but comprises a simple sleeve (31) inserted in the end of the tube before assembly of the tube in the coupling body.

## Claims

1. A tube coupling comprising a body (13) having a throughway (19) with at least one open end to receive a tube (11) to be connected therein, the throughway having an annular shoulder (16) encircling the throughway at a location spaced from said open end and facing towards the open end to form an end stop for a tube to be inserted in the throughway, the throughway having an enlarged portion (15) adjacent to the open end of the throughway, a device (23) in the enlarged portion of the throughway to receive and grip a tube located in the throughway and sealing means consisting of two annular seals encircling the tube to prevent loss of fluid from the open end of the throughway; characterised in that the sealing means comprise an annular seal (29) formed integrally with the body around the throughway adjacent to the annular shoulder (16) to engage and seal with the outer surface of the tube located in the throughway and further an annular sealing ring (28) located in the enlarged portion (15) of the throughway between the tube gripping device (23) and said integral annular seal (29) to engage and seal with the outer surface of the tube.

2. A tube coupling as claimed in Claim 1 characterised in that a sleeve (18) is provided to engage in the part of the tube extending into the throughway to support the tube against said integral annular seal (29).

3. A tube coupling as claimed in Claim 2, characterised in that the sleeve (18) is formed integrally with the coupling body (13) extending from the annular shoulder (16) therein towards the open end of the throughway to engage in a tube inserted into the throughway.

4. A tube coupling as claimed in any of the preceding claims, characterised in that the coupling device comprising a collet (23) having a multiplicity of resilient fingers (24) projecting in said throughway and the throughway has a tapered cam surface (22) diminishing towards the open end of the throughway with which the fingers of the collet are engageable to press the fingers against the outer surface of the tube and thereby lock the tube in the throughway.

5. A tube coupling as claimed in any of the preceding claims, characterised in that the coupling body (13) has a plurality of open ends each having coupling devices (13) and annular seals (28; 29) to receive and hold tubes (11) in sealing engagement therein.

## Patentansprüche

1. Rohrkupplung bestehend aus einem Körper (13) mit einem Durchgang (19) mit wenigstens einem offenen Ende, um ein anzuschließendes Rohr (11) aufnehmen zu können, wobei der Durchgang (19) eine ringförmige Schulter (16) aufweist, die den Durchgang an einem Ort umgibt, der zum offenen Ende einen Abstand aufweist, und dem offenen Ende zugewandt ist, um einen Endanschlag für das in den Durchgang einzusetzende Rohr zu bilden, und der Durchgang (19) weiterhin in der Nähe des offenen Endes einen vergrößerten Abschnitt (15) aufweist, einer Einrichtung (23) in den vergrößerten Abschnitt des Durchgangs zum Aufnehmen und Ergreifen eines im Durchgang angeordneten Rohres, und Dichtmitteln bestehend aus drei ringförmigen Dichtungen, die das Rohr umgeben, um Fluidverlust am offenen Ende des Durchgangs zu verhindern, dadurch **gekennzeichnet,** daß die Dichtmittel eine ringförmige Dichtung (29) aufweisen, die in der Nähe der ringförmigen Schulter (16) einstückig mit dem Körper (13) um den Durchgang herum ausgebildet ist, um die Außenfläche des im Durchgang angeordneten Rohres zu erfassen und abzudichten, und im vergrößerten Abschnitt (15) des Durchgangs zwischen der Rohr-Greifeinrichtung (23) und der einstückig ausgebildeten, ringförmigen Dichtung (29) einen weiteren Dichtring (28) aufweisen, der die Außenfläche des Rohres erfaßt und abdichtet.

2. Rohrkupplung nach Anspruch 1, dadurch **gekennzeichnet,** daß eine Hülse (18) vorgesehen ist, die mit dem Teil des Rohres zusammenwirkt, der sich im Durchgang erstreckt, um das Rohr gegen die einstückig ausgebildete, ringförmige Dichtung (29) zu halten.

3. Rohrkupplung nach Anspruch 2, dadurch **gekennzeichnet,** daß die Hülse einstückig mit dem Kupplungskörper (13) ausgebildet ist und sich von dessen ringförmiger Schulter (16) aus zum offenen Ende des Durchgangs erstreckt, um mit einem Rohr zusammenzuwirken, das in den Durchgang eingesetzt ist.

4. Rohrkupplung nach irgendeinem der vorstehenden Ansprüche, dadurch **gekennzeichnet,** daß die Kupplungseinrichtung eine Klemmhülse aufweist, die eine Vielzahl federnder Finger (24) hat, welche in den Durchgang ragen, und der Durchgang eine geneigte Steuerfläche (22) aufweist, die sich zum offenen Ende des Durchgangs hin verkleinert, mit der die Finger der Klemmhülse zusammenwirken, wobei die Finger gegen die Außenfläche des Rohres gedrückt werden und dabei das Rohr im Durchgang sperren.

5. Rohrkupplung nach irgendeinem der vorstehenden Ansprüche, dadurch **gekennzeichnet,** daß der Kupplungskörper (13) mehrere offene Enden aufweist, die jeweils eine Kupplungseinrichtung (13) und ringförmige Dichtungen (28, 29) aufweisen, um Rohre (11) aufzunehmen und abgedichtet zu halten.

## Revendications

1. Raccord de tuyau comprenant une boîte pour raccord (13) traversée par un passage (19) dont une extrémité au moins est ouverte pour recevoir un tuyau (11) destiné à être raccordé à l'intérieur, le passage présentant un épaulement annulaire (16) qui entoure ce passage en un emplacement écarté de ladite extrémité ouverte et orienté vers l'extrémité ouverte pour constituer une butée d'extrémité pour un tuyau à introduire dans le passage, le passage présentant une partie élargie (15) adjacente à l'extrémité ouverte du passage, un dispositif (23) dans la partie élargie du passage pour recevoir et bloquer un tuyau situé dans le passage et un moyen d'étanchéité comprenant deux joints annulaires entourant le tuyau pour empêcher les fuites de fluide à l'extrémité ouverte du passage ; caractérisé en ce que les moyens d'étanchéité comprennent un joint annulaire (29) faisant partie intégrante de la boîte pour raccord autour du passage, adjacent à l'épaulement annulaire (16) pour venir en prise avec et rendre étanche la surface extérieure du tuyau placé dans le passage et en outre un joint d'étanchéité annulaire (28) placé dans la partie élargie (15) du passage entre le dispositif de blocage (23) du tuyau et ledit joint annulaire (29) en faisant partie intégrante pour venir en prise avec la surface extérieure du tuyau et la rendre étanche.

2. Raccord de tuyau selon la revendication 1, carctérisé en ce qu'un manchon (18) est installé pour venir en prise avec la partie de tuyau pénétrant dans le passage pour supporter le tuyau contre ledit joint annulaire intégré (29).

3. Raccord de tuyau selon la revendication 2, caractérisé en ce que le manchon (18) fait partie intégrante de la boîte pour raccord (13) en partant de l'épaulement annulaire (16) de cette dernière en direction de l'extrémité ouverte du passage pour venir en prise avec un tuyau introduit dans le passage.

4. Raccord de tuyau selon l'une quelconque des revendications précédentes, caractérisé en ce que le dispositif de raccord comprend un collet (23) portant de multiples doigts élastiques (24) faisant saillie dans ledit passage et dans lequel le passage comprend une surface de came effilée (22) qui diminue en direction de l'extrémité ouverte du passage et avec laquelle les doigts du collet peuvent venir en prise pour comprimer les doigts contre la surface extérieure du tuyau et bloquer ainsi le tuyau dans le passage.

5. Raccord de tuyau selon l'une quelconque des revendications précédentes, caractérisé en ce que la boîte pour raccord (13) comporte plusieurs extrémités ouvertes ayant chacune des dispositifs de raccord (13) et des joints annulaires (28 ; 29) pour recevoir et maintenir des tuyaux (11) en prise d'étanchéité à l'intérieur.
